# EUROPEAN PATENT APPLICATION

(11) **EP 4 557 112 A1**
(43) Date of publication of application: **21.05.2025**
(21) Application number: 24209829.1
(22) Date of filing: 30.10.2024
(51) Int. Cl.: G06F 13/38

(54) **SMART DATA LINK CONNECTOR INTERFACE**

(30) Priority: 16.11.2023 US 202363599842 P; 28.10.2024 US 202418928856
(71) Applicant: Aptiv Technologies AG, 8200 Schaffhausen (CH)
(72) Inventor: RECCHIA, Joseph M, 8200 Schaffhausen (CH); DE LA TORRE FERNANDEZ, Geronimo Mauricio, 8200 Schaffhausen (CH); VILLARREAL, Sergio, 8200 Schaffhausen (CH)
(74) Representative: Bardehle Pagenberg Partnerschaft mbB Patentanwälte Rechtsanwälte

(57) **Abstract**

A connector module is described that includes a diagnostic header interface configured to be accessible via a housing. The connector modules also includes at least one high speed data header interface configured to be accessible via the housing. The connector module also includes a printed circuit board (PCB) within the housing, the PCB includes at least one electrical conductor that electrically couples the high speed data header interface to at least one port of the diagnostic header interface.

## Description

### TECHNICAL FIELD

This application relates generally to electrical systems, and more specifically to advancements in electrical systems used in vehicular applications.

### BACKGROUND

Modern vehicles, such as automobiles, incorporate more and more features that rely on advanced communications technologies that require transmission of data at high rates. High-speed data cables, for example ethernet cables, twisted pair cables, or coaxial cables are used in automotive applications to transfer data at high speeds, for example to implement vehicle communications and/or computing functions. Some vehicles also employ diagnostic systems that enable access to error codes that communicate status information for vehicle systems to enable vehicle repair and maintenance. In some examples, such diagnostic systems may incorporate a Data Link Connector (DLC) multi-pin connection port.

For some applications, it may be desirable to couple high-speed data cables, such as ethernet cables, and vehicle diagnostic conductors together to enable vehicle diagnostic information to be communicated at high transmission rates to other vehicle systems or systems external to the vehicle. According to traditional techniques, high speed data cables such as ethernet cables may be electrically coupled to a header connector of a vehicle diagnostics system via a manual process. For example, drain wires of the ethernet cable(s) may be coupled together by splicing, soldering, or the like with ground conductors that couple the drain wires with a chassis ground of the vehicle and/or to a ground port of the vehicle diagnostics header. Signal wires of the ethernet cable(s) may be coupled to the vehicle diagnostics header via terminals that terminate the signal wires. The splice(s) and/or ethernet cable ends may be encased in a protective cover, such as shrink wrap, to protect the connections.

Known techniques for coupling communications and diagnostic system conductors may be difficult and/or expensive to implement, for both automotive parts suppliers and their vehicle manufacturing customers. Such connections may also be potentially prone to unintended disconnect, which may be particularly undesirable in many vehicle applications. In some examples, such connections may not withstand a pull force of 110 N recommended for production vehicles.

A need exists for improvements in automotive connection solutions to incorporate high-speed data transmission functionality with traditional automotive electrical systems.

### SUMMARY

In some aspects, a connector module includes a diagnostic header interface configured to be accessible via a housing. The connector module further includes at least one high speed data header interface configured to be accessible via the housing. The connector module further includes a printed circuit board (PCB) within the housing. The PCB includes at least one electrical conductor that electrically couples the high speed data header interface to at least one port of the diagnostic header interface.

In some aspects, a method includes coupling a high speed data cable to at least one high speed data header interface accessible via a housing that houses a printed circuit board (PCB). The method further includes coupling a mating diagnostics connector to a diagnostic header interface accessible via the housing. The method further includes communicating between the mating diagnostics connector and the high speed data cable via the PCB that includes an electrical conductor that electrically couples the high speed data header interface to at least one port of the diagnostic header interface.

### BRIEF DESCRIPTION OF THE DRAWINGS

FIG. 1 is a block diagram showing an integrated connector module according to some embodiments.
FIG. 2A shows a perspective view of a first side of a connector module according to some embodiments.
FIG. 2B shows a perspective view of a second side of the connector module according to some embodiments.
FIG. 2C shows a perspective view from the second side of the connector module with a cover of the housing installed according to some embodiments.
FIG. 3A shows a perspective view of a first side of a connector module according to some embodiments.
FIG. 3B shows a perspective view of a second side of the connector module according to some embodiments.
FIG. 3C shows a perspective view from the second side of the connector module with a cover of the housing installed according to some embodiments.
FIG. 4 depicts a printed circuit board (PCB) of an integrated connector module according to some embodiments.
FIG. 5A is a chart that shows interconnections between respective components of an integrated connector module according to some embodiments.
FIG. 5B depicts a multi-layered PCB of an integrated connector module according to some embodiments.
FIG. 6 is a flow diagram that depicts one example of a method of operating an integrated connector module according to some embodiments.

### DETAILED DESCRIPTION

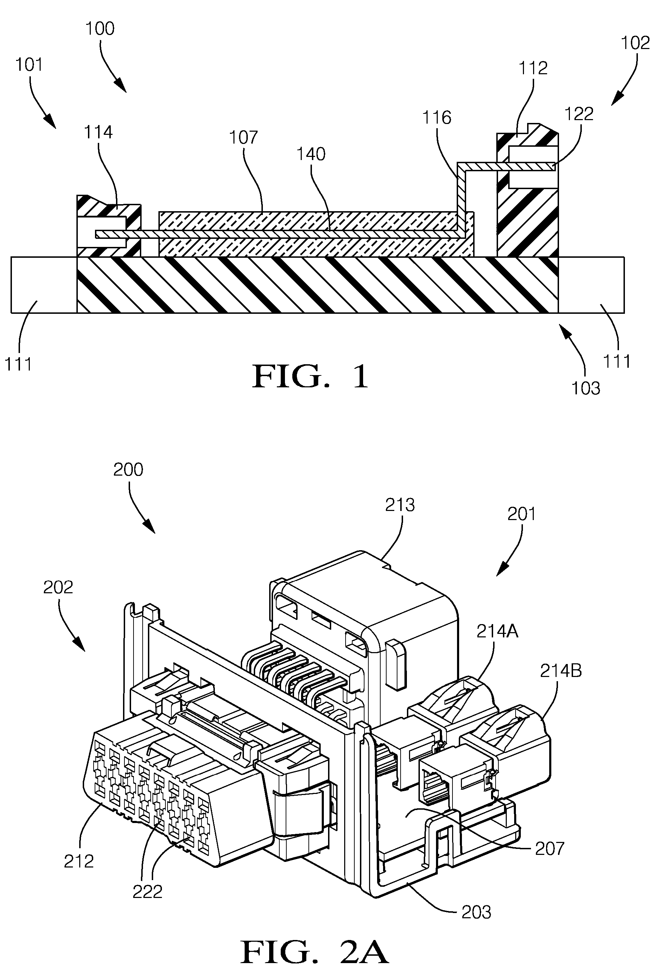

FIG. 1 is a block diagram showing an integrated connector module 100 according to some embodiments. As shown in FIG. 1, the connector module 100 includes a diagnostic header interface 112 and one or more high speed data header interface(s) 114, which are accessible via a housing 103. In the example of FIG. 1, the diagnostics header interface 112 and high speed data header interface(s) 114 are both shown structurally supported by a part of the housing 103. In some examples, the housing 103 further includes a cover not depicted in FIG. 1.

As shown in FIG. 1, the connector module 100 includes a printed circuit board (PCB) 107 within the housing 103. As shown in the FIG. 1 example, the PCB 107 includes at least one electrical conductor 140 that electrically couples the high speed data header interface(s) 114 to at least one port 122 of the diagnostic header interface 112.

In some examples, the at least one high speed data header interface(s) 114 include an ethernet port such as a twisted pair ethernet port. In some examples, the connector module 100 enables access to a twisted pair ethernet cable coupled to the at least one high speed data header interface 114 through the at least one port 122 by coupling a mating diagnostic connector (not shown) to the diagnostic header interface 112. In some examples, the diagnostic header interface 112 is an On Board Diagnostic II (OBD-II) connector interface.

In some examples, the diagnostic header interface 112 and/or the at least one high speed data header interface 114 are configured to be accessible via the housing 103, e.g., presented at one or more surfaces of the housing 103, such as one or more side surfaces of the housing 103, a top surface (i.e., through a cover, not shown in FIG. 1), or a bottom surface of the housing 103.

In some examples, the diagnostic header interface 112 and/or the at least one high speed data header interface 114 are accessible via one or more sides of of the housing 103. As shown in FIG. 1, the high speed data header interface 114 is accessible via a first side 101 of the housing 103. As also shown in FIG. 1, the diagnostic header interface 112 is accessible via a second side 102 of the housing 103. As shown in the example of FIG. 1, the first side 101 of the housing 103 may be opposed to the second side 102 of the housing 103. In some examples, as shown in FIG. 1, the connector module 100 includes at least one pin 116 that extends vertically from the diagnostic header interface 112 to the PCB 107 (e.g., to contact the conductor 140).

In some examples, although not specifically shown in FIG. 1, the connector module 100 includes a solder connection between the high speed data header interface 114 and the PCB 107. In some examples the PCB 107 is a multi-layer PCB, and the electrical conductor 140 comprises at least includes at least one trace formed in a layer of the multi-layer PCB. In other examples, the electrical conductor is formed on or embedded in a surface of the PCB.

As shown in FIG. 1, the connector module 100 further includes one or more fixation feature(s) 111. The fixation feature(s) 111 are configured to secure the connector module 100 in a position, for example attached to a surface of a vehicle, and to couple a ground connection of the connector module (e.g., coupled to a ground connection of the high speed data header interface(s) 114 and/or of the diagnostic header interface 112) to a ground reference such as a chassis ground of a vehicle. In some examples, the fixation feature(s) are screw holes configured to receive a screw, bolt, or other similar fixation mechanism to secure the connector module 100 in position and establish connection to a ground reference like chassis ground. In other examples, the fixation features 111 may include snaps features that engage with corresponding snap features coupled to a vehicle surface secure the connector module 100 in position and establish connection to a ground reference like chassis ground.

The connector module 100 may offer significant advantages in comparison to prior techniques for coupling a high speed data cable such as an ethernet cable to a high speed data header interface 114 as described. For example, connector module 100 may be significantly easier and/or cost effective to implement in a vehicle in comparison to traditional solutions. In some examples, connector module 100 may be relatively simple and cost effective to manufacture in comparison to traditional solutions. In some examples, connector module 100 may be less susceptible to intended disconnect than traditional solutions.

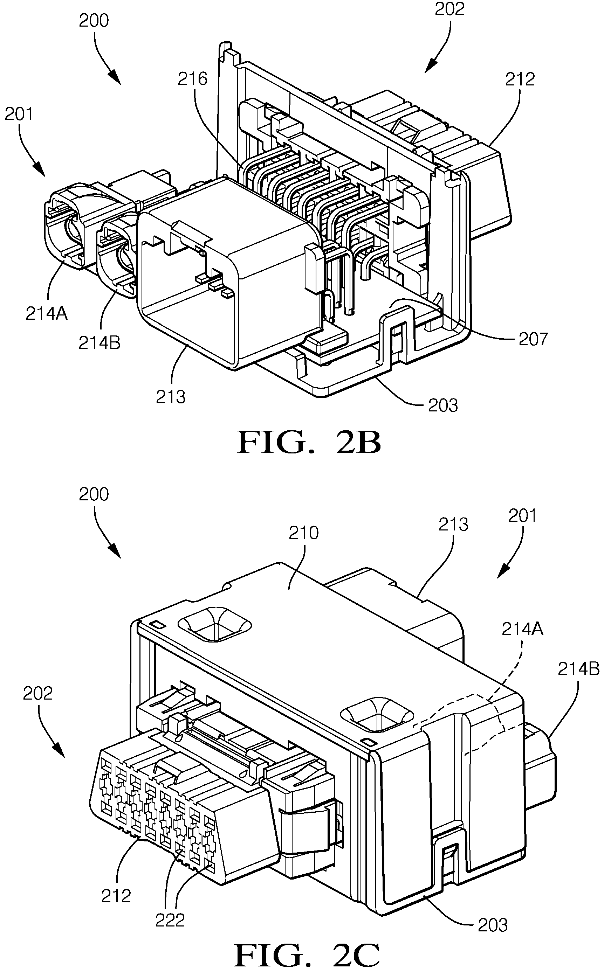

FIGS. 2A-2C show perspective views of an integrated connector module 200 according to some embodiments. FIG. 2A shows a perspective view of a first side 201 of the connector module 200 according to some embodiments. FIG. 2B shows a perspective view of a second side 202 of the connector module 200 according to some embodiments. FIG. 2C shows a perspective view from the second side 202 of the connector module 200 with a cover 210 of the housing 203 installed according to some embodiments. The integrated connector module 200 shown in FIGS. 2A-2C generally corresponds to the connector module 100 depicted in FIG. 1 and includes a housing 203 as well as a diagnostic header interface 212 and at least one high speed data header interface 214A, 214B that are accessible via the housing 203. The connector module 200 further includes a PCB 207 that carries at least one electrical conductor (not shown in FIGS. 2A-2C) that couples the at least one high speed data header interface 214A, 214B to at least one port 222 of the diagnostic header interface 212.

As shown in FIG. 2A, module 200 includes a first side 201 with a high speed data header interfaces 214A, 214B configured to be coupled with one or more high speed data cables and/or other conductors, such as ethernet, coaxial, or other type of high speed data cable. In the example of FIG. 2A, module 200 includes two independent high speed data header interfaces 214A, 214B at the first side 201 of module 200, which are ethernet interfaces configured to be coupled to respective ethernet cables, which may be automotive ethernet cables. One example of such an automotive ethernet cable is the High-Speed Modular Twisted-Pair Data (H-MTD^{®}) cables, connectors and/or connection systems sold by Aptiv and Rosenberger. In some examples, an automotive ethernet cable may differ from a traditional non-automotive ethernet cable in that it uses a single, balanced wire pair to transmit data. In some examples, the high speed data header interfaces 214A, 214B may be coupleable to ethernet or other high speed data cables that support data transmission rates of greater than 10Mbps. In some examples, the high speed data header interfaces 214A, 214B may be coupleable to ethernet or other high speed data cables that transmit data at frequencies up to 20 GHz and data transmission rates up to 56G bits/second.

In the example of FIG. 2A, the first side 201 of module 200 also includes a general purpose (GP) header interface 213 configured to be coupled to a GP connector. In some examples, the general purpose (GP) header interface 213 at side 201 may be coupled to conductors configured to carry relatively low-speed signals or data, such as signals or data associated with a traditional vehicle diagnostics system. In other examples not shown in FIGS. 2A-2C, module 200 may not include the GP header interface 213 shown in FIGS. 2A-2C, or may include other types of header interfaces, including one or more other high speed data header interfaces like additional ethernet header interface(s), coaxial header interface(s), fakra header interface(s), or the like.

As shown in FIG. 2B, module 200 includes a diagnostic header interface 212 at a second side 202 of module 200. The diagnostic header interface 212 enables coupling to a diagnostic system of the vehicle. For example, the diagnostic header interface 212 may be an on-board diagnostics header connector, such as an OBD-II connector, that is part of a vehicle diagnostics system in some embodiments.

As shown in FIGS. 2A and 2B, module 200 further includes a printed circuit board (PCB) 207. The high speed data header interface(s) 214A, 214B are mounted on the PCB 207 surface at the first side 201 of module 200, and the diagnostic header interface 212 is mounted on the PCB 207 at the second side 202 of module 200. Pins 216 of the diagnostic header interface 212 are coupled to one or more conductor(s) (e.g., traces, vias, or other conductive structures (not shown)) in the PCB 207, which are electrically coupled to high speed data header interface(s) 214A, 214B through PCB 207, e.g., via a solder or other means for electrical coupling. Pins of the GP interface 213 are likewise coupled to one or more conductor(s) (e.g., traces, vias, or other conductive structures (not shown)) formed on and/or in the PCB 207. Pins representing signal, power, or ground conductors of one or more of the header interfaces 212, 213, 214A, 214B may be coupled to one another through PCB 207.

In some examples, as shown in FIG. 2C, module 200 further includes a cover 210 that encloses and protects PCB 207. Although not depicted in the example of FIGS. 2A-2C, in some examples, module 200 further includes fixation features, that may serve as a fixation mechanism to secure module 200 in place as part of a vehicle assembly. For example, the fixation features may include screw holes configured to receive a screw, bolt, pin, or the like to secure module 200 in a desired location as part of a vehicle assembly. In some examples, ground and/or drain conductors associated with one or more of header interface(s) 212, 213, 214A, 214B may be electrically coupled to the features through the PCB 207, which may be coupled to a vehicle chassis or other ground reference when secured in position by screws or bolts. In other examples, ground and/or drain conductors of header interface(s) 212, 214A, 214B may be electrically coupled to each other through PCB 207 and/or to a ground port of GP header interface 213. In other examples not depicted, mechanisms other than screw holes may be used to secure connector module 200 in a position in a vehicle and/or to establish a coupling to chassis ground or another ground reference, such as clips (not shown) on the housing that interface with corresponding clips secured to a vehicle surface.

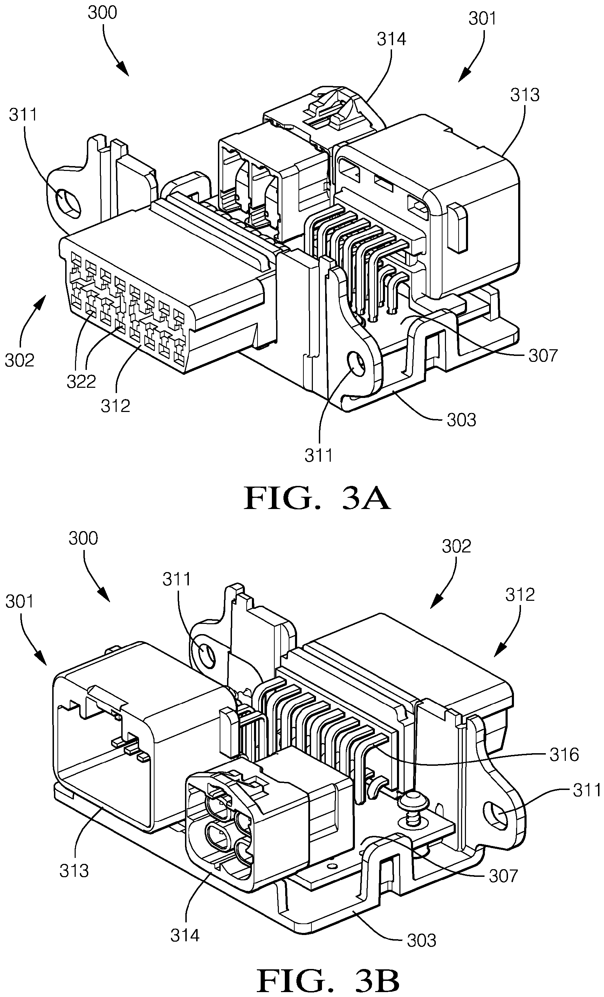

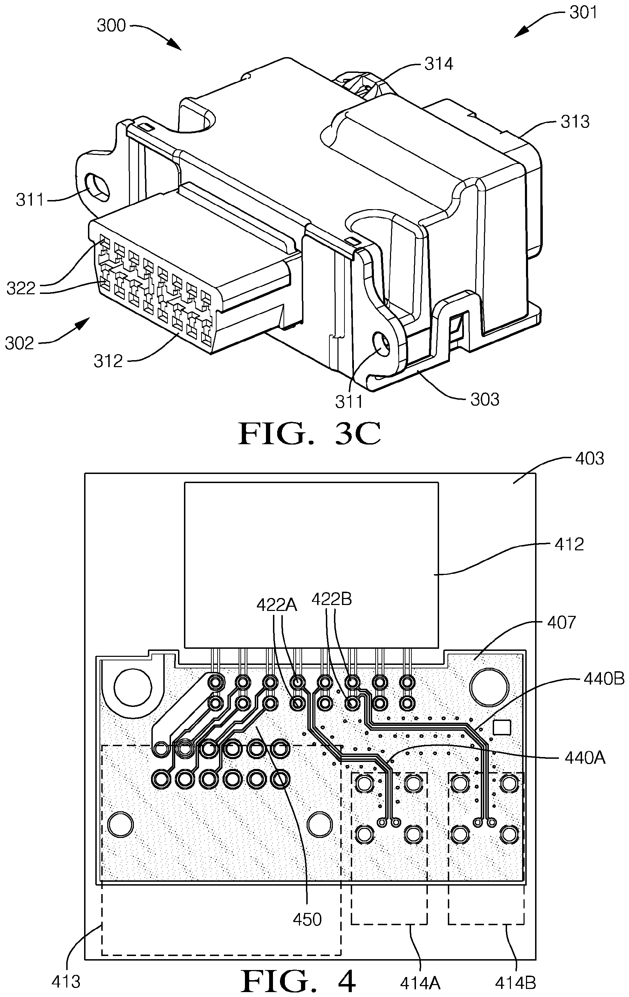

FIGS. 3A-3C show perspective views of an integrated connector module 300 according to some embodiments. FIG. 3A shows a perspective view of a first side 301 of the connector module 300 according to some embodiments. FIG. 3B shows a perspective view of a second side 302 of the connector module 300 according to some embodiments. FIG. 3C shows a perspective view from the second side 302 of the connector module 300 with a cover 310 of the housing 303 installed according to some embodiments. The integrated connector module 300 shown in FIGS. 3A-3C is substantially similar to the connector modules 100, 200 depicted in FIGS. 1 and 2A-2C- and includes a housing 303 as well as a diagnostic header interface 312 and at least one high speed data header interface 314 that are accessible via the housing 303. The connector module 300 further includes a GP header interface 313 in an optional embodiment. The connector module 300 further includes a PCB 307 that carries at least one electrical conductor (not shown in FIGS. 3A-3C) that couples the at least one high speed data header interface 314 to at least one port 322 of the diagnostic header interface 312.

As shown in FIG. 3A, like the module 200, module 300 includes a first side 301 with a high speed data header interface 314 configured to be coupled with one or more high speed data cables and/or other conductors, such as ethernet, coaxial, or other type of high speed data cable. In some aspects, module 300 differs from the example of FIGS 2A-2C in that module 300 includes a dual high speed data header interface 314 at the first side 301 of module 300, which support a pair of ethernet cable connectors configured to be coupled to respective ethernet cables, which may be automotive ethernet cables as described above.

In some aspects, unlike the module 200 depicted in FIGS. 2A-2C, the module 300 further includes fixation features 311, that may serve as a fixation mechanism to secure module 300 in place as part of a vehicle assembly. For example, the fixation features 311 may include screw holes configured to receive a screw, bolt, pin, or the like to secure module 300 in a desired location as part of a vehicle assembly as shown in the example of FIGS. 3A-3C. In some examples, ground and/or drain conductors associated with one or more of header interface(s) 312, 313, 314 may be electrically coupled to features 311 through PCB 307, which may be coupled to a vehicle chassis or other ground reference when secured in position by screws or bolts. In other examples, ground and/or drain conductors of header interface(s) 312, 314 may be electrically coupled to each other through PCB 307 and/or to a ground port of GP header interface 313. In other examples not depicted, other mechanisms may be used to secure connector module 300 and/or connector module 200 in a position in a vehicle and/or to establish a coupling to chassis ground or another ground reference, such as clips (not shown) on the housing that interface with corresponding clips secured to a vehicle surface.

FIG. 4 is a diagram depicting a printed circuit board PCB 407 of an integrated connector modules 400 according to some embodiments. The PCB 407 may correspond to the PCB 207 depicted in FIGS. 2A and 2B, the PCB 307 depicted in FIGS. 3A and 3B and/or the PCB 107 depicted in FIG. 1. Similar to these examples, PCB 407 includes conductors 440A, 440B configured to electrically couple one or more high speed data header interface(s) 414A, 414B to at least one port 422A, 422B of a diagnostic header interface 412. In the example of FIG. 4, the PCB 407 includes a pair of conductors 440A, that each couple respective complementary pairs of a differential signal from a first high speed data header interface 414A (i.e., a first ethernet port) to ports 422A of the diagnostic header interface 412. In the example of FIG. 4, the PCB 407 also includes a pair of conductors 440B, that each couple respective complementary pairs of a differential signal from a second high speed data header interface 414B (i.e., a second ethernet port) to a ports 422B of the diagnostic header interface 412. As shown in FIG. 4, the PCB 407 further includes conductors 450 that couple ports of the diagnostic header interface 412 to the GP interface 413. In the example of FIG. 4, the respective conductors 440A, 440B, 450 are shown formed on a surface (i.e., an upper surface in the FIG. 4 diagram) of a PCB 407. In other examples not depicted, the respective conductors 440A, 440B, and/or 450 may instead be formed as part of one or more internal layers of a multilayer PCB.

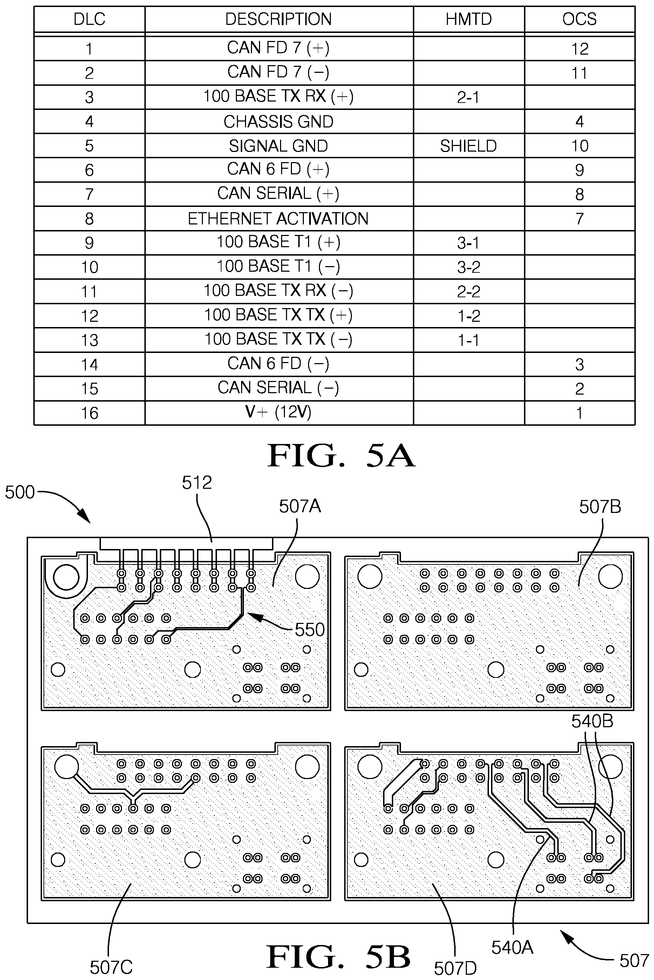

FIG. 5A is a chart that shows interconnections between respective components of an integrated connector module according to some embodiments. In the non-limiting example of FIG. 5, the column labeled "DLC" corresponds to pins of a diagnostic header interface as described herein, the column labeled "HMTD" corresponds to a high speed data header interface as described herein, and the column OCS corresponds to a general purpose header interface as described herein The column labeled "Description" includes a type of signal that corresponds to each interconnection of the integrated connector module.

As shown in FIG. 5A, a pin (1) of the diagnostic header interface 112 is coupled to a pin (12) of the GP header interface 213, 313 and carries a CAN FD (+) signal, and a pin (2) of the diagnostic header interface 112 is coupled to a pin (11) of the GP header interface 213, 313 and carries a complementary CAN FD (-). As shown in FIG 5A, a pin (4) of the diagnostic header interface 112 is coupled to a pin (2-1) of the high speed data header interface 114 and carries a complementary high speed data signal TX RX (+). As shown in FIG. 5A, a pin (5) of the diagnostic header interface 112 is coupled to a chassis ground reference (i.e., via fixation features 111, 211, 311 as described herein), which is also coupled to a pin (4) of the GP header interface 214, 314, and a pin (6) of the diagnostic header interface 112 is coupled to a signal ground reference, shielding of the high speed data header interface 114, and a pin (10) of the GP header interface 213, 313.

As shown in FIG. 5A, pins (6) and (7) of the diagnostic header interface 112 are coupled to pins (9) and (8) of the GP header interface 213, 313 carry CAN 6 FD (+) and CAN serial (+) signals, respectively, and a pin (8) of the diagnostic header interface 112 is coupled to a pin (7) of the GP header interface 213, 313 carrying an ethernet activation signal. As shown in FIG. 5A, pins (9), (10), (11), (12), and (13) of the diagnostic header interface 112 are coupled to pins (3-1), (3-2), (2-2), (1-2), (1-1), which each carry respective complementary 1000BASE high speed data (e.g., ethernet) signal. As shown in FIG. 5A, a pin (14) of the diagnostic header interface 112 is coupled to a pin (3) of the GP header interface 213, 313, carrying a CAN 6 FD (-) signal, a pin (15) of the diagnostic header interface 112 is coupled to a pin (2) of the GP header interface 213, 313, carrying a CAN serial FD (-) signal, and a pin (16) of the diagnostic header interface 112 is coupled to a pin (1) of the GP header interface 213, 313, carrying a positive power supply signal V+(12V).

FIG. 5B depicts an integrated connector module 500 that includes multi-layered PCB 507 according to some embodiments. The PCB 507 depicted in FIG. 5B may correspond any of PCB 107, 207, 307, 407 depicted and described herein. In the non-limiting example of FIG. 5B, PCB 507 includes four layers that each carry one or more conductor(s), or a portion of one or more conductors, that electrically couples a high speed data header interface (not shown in FIG. 5B) to at least one port of the diagnostic header interface 512. As shown in the FIG. 5B example, the layer 507C of the PCB 507 includes conductors 540A, 540B that electrically couple the high speed data header interface (not shown in FIG. 5B) to at least one port of the diagnostic header interface 512. As also shown in FIG. 5B, the PCB layer 507A includes conductors 550 that couple the diagnostic header interface 512 to a GP header interface.

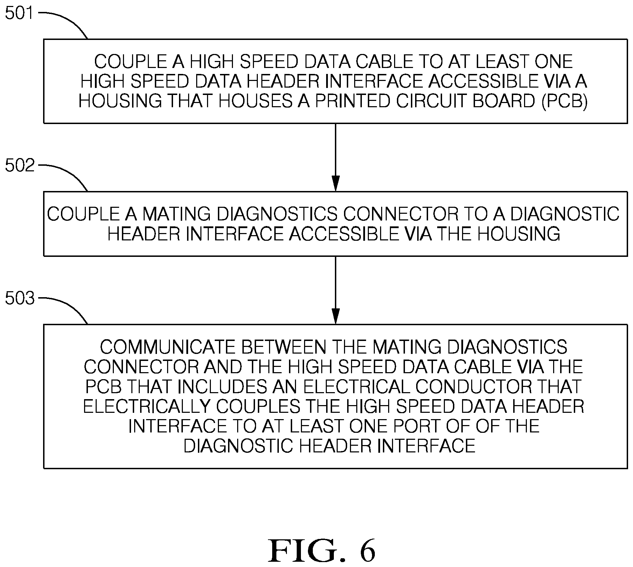

FIG. 6 is a flow diagram that depicts one example of a method of operating an integrated connector module 100, 200 according to some embodiments. As shown in FIG. 6, at 601, the method includes coupling a high speed data cable to at least one high speed data header interface 114 accessible via a housing 103 that houses a printed circuit board (PCB) 107. As also shown in FIG. 5, at 602, the method also includes coupling a mating diagnostics connector to a diagnostic header interface 112 accessible via the housing 103. As also shown in FIG. 5, at 603, the method further includes communicating between the mating diagnostics connector and the high speed data cable via the PCB that includes an electrical conductor 140 that electrically couples the high speed data header interface 114 to at least one port of the diagnostic header interface 112.

In some examples, the at least one high speed data header interface 114 includes at least one ethernet port. In some examples, coupling a mating diagnostic connector to the diagnostic header interface 112 enables access to a twisted pair ethernet cable coupled to the at least one high speed data header interface 114 through the at least one port 122.

In some examples, the method further includes coupling the high speed data cable to the at least one high speed data header interface 114 at a first side 101 of the housing 103, and coupling the mating diagnostic connector to the diagnostic header interface 112 includes at a second side 102 of the housing 103 opposed to the first side 101 of the housing 103. In some examples, the method further includes coupling a corresponding general purpose (GP) connector to a GP header interface 213 on the first side 201 with the at least one high speed data header interfaces 214A, 214B.

In some examples, the method further includes securing the connector module in position via at least one fixation feature 111 on the housing 103. In some example, coupling the fixation feature 111 comprises using screw holes on the housing to secure the connector module 100 in position and electrically couple the connector module 100 to a chassis ground and/or other ground reference. In some examples, coupling the fixation features 111 comprises using at least one clip to secure the connector module 100 in position and electrically couple the connector module 100 to chassis ground and/or another ground reference. In some examples, coupling the mating diagnostic connector to the diagnostic header interface 112 includes coupling an On Board Diagnostic II (OBD-II) connector interface.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A connector module (100, 200, 300, 400, 500), comprising:
a diagnostic header interface (112, 212, 312, 412, 512) configured to be accessible via a housing (103, 203, 303);
at least one high speed data header interface configured to be accessible via the housing (103, 203, 303); and
a printed circuit board, PCB (107, 207, 307, 407, 507), within the housing (103, 203, 303), the PCB (107, 207, 307, 407, 507) includes at least one electrical conductor (140) that electrically couples the high speed data header interface to at least one port of the diagnostic header interface (112, 212, 312, 412, 512).

2. The connector module (100, 200, 300, 400, 500) of claim 1, wherein the at least one high speed data header interface includes an ethernet port.

3. The connector module (100, 200, 300, 400, 500) of any of claims 1 and 2, wherein the connector module (100, 200, 300, 400, 500) enables access to a twisted pair ethernet cable coupled to the at least one high speed data header interface through the at least one port by coupling a mating diagnostic connector to the diagnostic header interface (112, 212, 312, 412, 512).

4. The connector module (100, 200, 300, 400, 500) of any of claims 1-3, wherein the diagnostic header interface (112, 212, 312, 412, 512) and the at least one high speed data header interface are presented on one or more surfaces of the housing (103, 203, 303).

5. The connector module (100, 200, 300, 400, 500) of any of claims 1-4, further comprising:
a first side (101, 201, 301) of the housing (103, 203, 303) that includes the at least one high speed data header interface; and
a second side (102, 202, 302) of the housing (103, 203, 303) opposed to the first side (101, 201, 301) that includes the diagnostic header interface (112, 212, 312, 412, 512).

6. The connector module (100, 200, 300, 400, 500) of claim 5, further comprising:
a general purpose header interface on the first side (101, 201, 301) with the at least one high speed data header interface.

7. The connector module (100, 200, 300, 400, 500) of any of claims 1-6, wherein the at least one high speed data header interface comprises a first ethernet port configured to be receive a first ethernet connector, and a second ethernet port configured to receive a second ethernet connector.

8. The connector module (100, 200, 300, 400, 500) of any of claims 1-7, further comprising:
at least one chassis ground connection on the housing (103, 203, 303) and configured to secure the connector module (100, 200, 300, 400, 500) in a position in a vehicle.

9. The connector module (100, 200, 300, 400, 500) of claim 8, wherein the at least one chassis ground connection comprises a pair of screw holes configured to receive a screw to secure the connector module (100, 200, 300, 400, 500) in the position and electrically couple the chassis ground connection to a chassis of the vehicle.

10. The connector module (100, 200, 300, 400, 500) of any of claims 8 and 9, wherein the at least one chassis ground connection comprises a clip configured to secure the connector module (100, 200, 300, 400, 500) in the position and electrically couples the chassis ground connection to a chassis of the vehicle.

11. The connector module (100, 200, 300, 400, 500) of any of claims 1-10, wherein the diagnostic header interface comprises an On Board Diagnostic II (OBD-II) connector interface.

12. The connector module (100, 200, 300, 400, 500) of any of claims 1-11, wherein the electrical conductor (140) comprises at least one pin that extends vertically from the diagnostic header interface (112, 212, 312, 412, 512) to the PCB (107, 207, 307, 407, 507).

13. The connector module (100, 200, 300, 400, 500) of any of claims 1-12, wherein the electrical conductor (140) comprises a solder connection between the high speed data header interface and the PCB (107, 207, 307, 407, 507).

14. The connector module (100, 200, 300, 400, 500) of any of claims 1-13, wherein the PCB (107, 207, 307, 407, 507) is a multi-layer PCB, and the electrical conductor (140) comprises at least one trace formed in a layer (507A, 507C) of the multi-layer PCB.

15. A method comprising, comprising:
coupling a high speed data cable to at least one high speed data header interface accessible via a housing (103, 203, 303) that houses a printed circuit board (PCB);
coupling a mating diagnostics connector to a diagnostic header interface (112, 212, 312, 412, 512) accessible via the housing (103, 203, 303); and
communicating between the mating diagnostics connector and the high speed data cable via the PCB (107, 207, 307, 407, 507) that includes an electrical conductor (140) that electrically couples the high speed data header interface to at least one port of the diagnostic header interface (112, 212, 312, 412, 512).
